# EUROPEAN PATENT APPLICATION

(11) **EP 4 621 145 A1**
(43) Date of publication of application: **24.09.2025**
(21) Application number: 25163955.5
(22) Date of filing: 14.03.2025
(51) Int. Cl.: E03B 3/02, G06F 16/958

(54) **COMPUTER-IMPLEMENTED METHOD AND CORRESPONDING DEVICE FOR MONITORING AND MANAGING A RAINWATER HARVESTING SYSTEM**

(30) Priority: 20.03.2024 PT 2024119335
(71) Applicant: L.N. ÁGUAS - Sistemas de Bombagem, Lda., 2645-550 Alcabideche (PT)
(72) Inventor: Marques das Neves, Luís Filipe, 2775-530 Carcavelos (PT); Marques das Neves, António Fernando, 2785-751 S. Domingos de Rana (PT)
(74) Representative: Carvalho Franco, Isabel

(57) **Abstract**

The present invention relates to a computer-implemented method and a data processing device comprising means for executing the method for monitoring and managing a rainwater harvesting system.

The method is suitable for identifying and detecting data indicative of rainfall conditions through at least one reading means, determining the roof washing and first flush diversion time based on the ratio between the roof area and the rainfall, collecting the water in the chamber and subsequently directing it to the rainwater drainage networks, recording the rainwater level and readjusting the filling levels from the mains water supply and the borehole according to the reservoir, and setting the overflow, borehole and mains supply levels in accordance with the reservoir, based on the ratio between the volume and the depth thereof.

## Description

### Technical Field of the Invention

The present invention falls within the field of monitoring and control of rainwater monitoring and management systems, in particular in the management and control of multiple variables, such as the diversion of first rainwater or the maximum effective dry period, by means of a computer-implemented method and a data processing device comprising means for executing said method.

### Summary of the Invention

The present invention relates to a computer-implemented method and a data processing device comprising means for executing the method for monitoring and managing a rainwater harvesting system.

The above-mentioned device comprises the following elements:
- A programmable logic controller (PLC) with 14 digital inputs, 10 digital outputs and 2 analogue inputs, with a 230/24Vdc 30W power supply;
- Polychromatic graphic console;
- Switched-mode power supply for the PLC power circuit, 230/24 VDC, 30W;
- Switched-mode power supply for the power circuit, 230/12 VDC, 30W;
- 220V/24V AC 100 VA transformer for supplying the respective panel components;
- Galvanic isolator for the analogue inputs;
- 24VDC Ethernet switch;
- GPRS router 9-30VDC with GSM antenna;
- CRN-type metal enclosure, dimensions 700x500x210 mm;
- Electronic control relays;
- Protection circuit breakers;
- 2-pole residual current device, 25A, 300mA;
- Main cut-off switch;
- Fuse isolator;
- Isolated terminal block strip.

This is available in five languages, namely Portuguese, English, French, German, and Spanish, and is capable of transmitting information remotely via GSM, including sending alarm messages. The user can define which alarms are to be sent, to which registered mobile phone (up to 7) numbers, and at the desired/specified times.

The computer-implemented method uses a format of structured variables and functional blocks for monitoring and managing a rainwater harvesting system, and is characterised by comprising the identification and detection of data indicative of rainfall conditions from one or more reading means with automatic start-up, i.e., operating by electromechanical means based on the programming defined in the programmable logic controller; the diversion of the first flush; the collection of water in the chamber and subsequent routing to the rainwater drainage networks, through monitoring means and registration of the rainwater level; and the readjustment of filling levels from the mains water supply and the borehole, depending on the reservoir.

### Detailed Description of the Invention

The present invention relates to a computer-implemented method and the respective data processing device comprising means for executing the method for monitoring and managing a rainwater harvesting system.

The computer-implemented method, using a format of structured variables and functional blocks, is configured for monitoring and managing a rainwater harvesting system, characterised by comprising:
- identification and detection of data indicative of rainfall conditions through at least one reading means, operating purely by electromechanical means based on the programming defined in the programmable logic controller (PLC), for the diversion of the first flush;
- definition of the roof washing time and first flush diversion time based on the ratio between the roof area and the rainfall;
- collection of water in the chamber and subsequent routing to the rainwater drainage networks through monitoring means;
- recording of the rainwater level and readjustment of the filling levels from the mains water supply and the borehole depending on the reservoir; and
- parameterisation of the overflow, borehole, and mains water supply levels, in accordance with the reservoir, based on the ratio between its volume and depth.

The method further comprises the management of the dry period and the maximum effective dry period, through pre-programming of the timing for the first rainwater, the management and monitoring of water overflow by means of at least one reading device coupled to the reservoir and the programming in the programmable logic controller (PLC), and further comprises the recording of water consumption and the recording of the operating time of the pumping system.

This invention further comprises a data processing device comprising means for executing the method as described above, said device being characterised by comprising a synoptic representation of the installation with a colour-coded scheme, one or more pages of dynamic settings depending on the selection of more or fewer configuration elements of the installation, and allowing the retrieval of any information via the GSM network.

In a first phase, the computer-implemented method is configured to programme the timing of the first discharge according to the size of the installation. This function also enables the diversion of the first rainwater resulting from roof washing.

The entire process is managed by the device, which is configured to operate automatically, without any intervention from the operator.

The device, through the rain detection reading means, detects rainfall and automatically triggers the start of the first discharge process, with an adjustable timing (1 to 60 minutes), allowing the first rainwater falling on the roof-containing organic load and debris from dirt accumulated on the surface-to be diverted to the rainwater drainage network, thereby preventing it from entering the filtration system and reaching the reservoir.

The water collected in the first discharge chamber is routed to the rainwater drainage network through a motorised first discharge valve, which is normally open.

At the end of the set timing, the device issues a command to close the first discharge valve, indicating its status on the synoptic display. Once the valve is fully closed, the water level in the first discharge chamber rises and proceeds to the filtration system, preventing leaves or other debris from reaching the reservoir.

After the filtration process, the water is directed into the reservoir, and the water level starts to rise, showing the percentage and scale in metres.

The first discharge valve also serves to control the overflow level and can be programmed for a period between 1 and 60 minutes to manage excess water in the system.

It consists of a butterfly-type valve and an electrically powered servo motor actuator.

The actuator has the capability to manually open/close the above-mentioned valve, as it is equipped with a manual operating handle in the event of any malfunction.

The actuator, featuring both a visual and illuminated indicator, shows whether the valve is open or closed, transmitting this information to the device via limit switches and relays integrated within the actuator.

In a subsequent phase, the system is capable of monitoring a rain-free period, using this monitoring/data to manage the timing of the first discharge and the restarting time of the same cycle.

The device is therefore configured to monitor:
- Maximum effective dry period - resets the first discharge timer; and
- Dry period timer with first discharge completed - initiates a new cycle.

During the maximum effective dry period, the first discharge timer is restarted. This setting means that during the course of the first discharge time, the valve remains open for the programmed duration, for example: 30 minutes.

If rainfall stops during the first discharge time, the countdown is paused, and if the cycle is interrupted, after 30 minutes the countdown is restarted.

Example:
- Programmed first discharge time: 6 minutes
- Time valve remains open without rainfall: 30 minutes
- The rain sensor detects rainfall and starts the first discharge timer
- Rain stops after 2 minutes, leaving 4 minutes remaining to complete the programmed time

If no further rainfall occurs within the following 30 minutes, the valve remains open, and a new cycle is initiated.

In the timing function for "dry period with first discharge completed
- start of new cycle", this setting defines that after 96 hours without rainfall, a new first discharge cycle is triggered.

### Example:

If the system is configured with a 96-hour dry period threshold, then after this period without rain, a new roof washing cycle is recommended to remove any accumulated sediment.

Once the programmed 96-hour period is reached, a new first discharge cycle is initiated.

To configure this, the system allows programming of the dry period timing that triggers the start of a new cycle, following the completion of a previous first discharge.

In a preferred embodiment of the invention, the device is capable of controlling overflow, ensuring that there is no excess water entering the rainwater harvesting system, thus preventing system overload and extending the lifespan of the filtration medium. This function limits the inflow of water into the reservoir.

In another preferred embodiment of the invention, it is possible to record water consumption and obtain information from all networks, namely non-potable water consumption, mains water consumption, and water consumption from a borehole. Consumption records can be partial or total, with indication by day, month, and year.

This function enables the measurement of the amount of rainwater and other water sources used within the system.

In a further preferred embodiment of the invention, it is possible to record the operating time (pumping system), enabling the system to receive information from the pumping system to log the running time and number of start-ups.

This information is obtained via a digital signal from the pumping system and through recording the water level (in hours/days), allowing the assessment of whether the system's reservoir is adequate for the consumption, and thereby enabling the adjustment of filling levels from the mains supply and the borehole. It also allows consumption adjustment.

The data processing device comprising means for executing the method has been developed using a structured variables and functional blocks format, providing:
- An animated synoptic diagram representing the installation (the objects within the synoptic change their operating state by colour code) ;
- A language selection page with 5 different foreign languages (Portuguese, English, French, German, Spanish);
- Dynamic adjustment pages (depending on the selection, more/fewer configuration options and installation elements are displayed);
- An operational page for the constituent elements of the installation (manual mode, automatic mode, and out-of-service selection);
- A Datalogger recording system for operating hours, flow rates, and trend records for water level;
- Selectable SMS alarm messaging for up to 7 different phone numbers.

The device can be configured in various ways, depending on the system/installation to which it is connected.

Configuration is the starting point for device parameterisation. To successfully complete the configuration, it is necessary to configure 10 items according to the type of installation.

By selecting each of the items, an alphanumeric keypad appears again, repeating the same procedure.

By default, all item "switches" are set to "OFF".

When the switch is set to "ON", the item becomes active. Below is a list of various examples of configurations and variables of the device and the computer-implemented method.
**01** - Client name: To be defined, for example: LNAGUAS.
**02** - Installation name: To be defined, for example: LNAGUAS Headquarters Building - Lisbon.
**03** - Mains water valve installed: To be enabled if the system includes supplementary filling via the mains water supply.
**04** - Enable mains water flow totalisation: This function is only activated if a pulse-type volumetric meter is present, used to measure the volume of mains water supplied to the system.
**05-** Borehole water valve installed: To be enabled if the system includes supplementary filling via a borehole.
**06** - Enable borehole water flow totalisation: This function is only activated if a pulse-type volumetric meter is present, used to measure the volume of borehole water supplied to the system.
**07** - Enable totalisation of consumed water flow: This function is only activated if a pulse-type volumetric meter is present, used to measure the volume of water consumed at the outlet of the pumping system that supplies the non-potable water network.
**08** - SMS alarm messaging enabled: This function is used to send configured alarms to the various predefined mobile phone numbers.
**09** - Enable general alarm outputs: This function activates the remote signalling of a general fault.
**10-** RESET days with and without rainfall: This function clears the count of days with and without rain.

### Use of mains water supply

**03** - If mains water filling is available, the switch must be changed from "OFF" to "ON".

**04** - Enable mains water flow totalisation:
To proceed with calibration, the switch must be moved from the "OFF" position to the "ON" position.

A calibration prompt for flow per pulse appears - e.g., 100 L/pulse. Depending on the meter manufacturer, the calibration value may differ and must be adjusted accordingly to ensure accurate flow measurement. When tapping on the screen where the litres per pulse are displayed, the system will again prompt for "user" and "password".

### Use of borehole water

**05** - If supplementary filling is provided via a borehole, the switch must be changed from "OFF" to "ON".

**06** - Enable borehole water flow totalisation:
To proceed with calibration, the switch must be moved from the "OFF" position to the "ON" position.

A prompt will appear for calibration of the flow per pulse for the meter, e.g., 100 L/pulse.

Depending on the meter manufacturer, the calibration value may vary and must therefore be adjusted accordingly to ensure accurate flow measurement.

### Activation and calibration of the consumed water meter

**07** - Enable totalisation of consumed water flow:
To proceed with calibration, the switch must be moved from the "OFF" position to the "ON" position.

A prompt will appear for calibration of the flow per pulse for the meter, e.g., 1 L/pulse.

Depending on the meter manufacturer, the calibration value may vary and must therefore be adjusted accordingly to ensure accurate flow measurement.

### Activation of Installed SMS Alarm Transmission

**08** - The activation of this function is carried out by switching the key from the "OFF" position to the "ON" position. The programming will be performed on another configuration screen.

### Activation of General Alarm Output

09 - The activation of this function is carried out by switching the key from the "OFF" position to the "ON" position. The programming will be performed on a separate configuration screen.

To access this screen, it is necessary to tap twice on the "HOME" button located at the top right corner of the synoptic display.

Alternatively, press the "HOME" button once and then the "SYNOPTIC" button, which appears in the general system view at the bottom of the screen (see image below).

Tap on "SMS" within the synoptic view to access the alarm configuration screen and mobile phone number settings.

### Mobile Phone Number Settings

On this screen, adjustments to the mobile phone numbers and the configuration of the alarms to be sent will be carried out.

When tapping the "Settings..." button, a new screen opens for the configuration of mobile phone numbers, allowing up to a maximum of 7 numbers to be registered.

To begin configuring the mobile phone numbers, tap on "T1". The system will prompt again for "User" and "Password".

Next, tap the mobile number entry field and input the desired number.

Then, press the "SET ON" button until it displays "ON" to validate that the number is active and able to receive messages.

The next step is to configure the time window for sending the alarm message(s), by tapping on the "START" and "END" time fields and entering the desired schedule.

The "STATUS" indication will only show as "ON" when the "SET ON" switch is enabled. If it is deactivated, the "STATUS" will appear as "OFF", meaning that the mobile number will not receive alarms, although it remains saved in the contact list.

To add additional phone contacts, repeat the above procedure for each one.

### SMS-GSM Alarms

This configuration allows the selection of the desired type of alarm for the previously defined list of telephone contacts. It also allows the alarm to be selected according to the mobile phone number in the list; for example, in the image, all alarms are selected and will be sent only to telephone contacts T1 and T2.

Para efetuar a configuração tocar na tecla "0" ou "I" dos diferente contatos telefónicos.
Será necessário colocar novamente o "utilizador" e "senha, sendo a mesma da configuração inicial.

Após essa validação, se tocar na tecla "0" do contato T1, fica ativa com indicação "I".

Se pretende ativar mais contactos telefónicos deve tocar nas teclas dos outros contatos.

Caso pretenda desativar um dos contatos para não receber mensagem, voltar a tocar na tecla "1" e passa a "0".

Esta função poderá ser alterada sempre que o operador quiser gerir a sua equipa de manutenção ou para controle do sistema.

**Receção de mensagem SMS** - O(s) telemóvel(s) selecionado(s) vão receber mensagens de SMS com indicação do tipo de alarme(s), a ocorrer no momento. Se o alarme não for desativado ou resolvido, a mensagem será reenviada. .

### Alarm Log

### Active Alarms

To access this screen from the general synoptic, tap the "Alarms F8" button located at the top, or press the F8 key on the console.

This screen displays a list of alarms that are currently active or have already been resolved, with an indication of the date/time and their resolution.

If multiple alarms occur, they are recorded in the list according to their date/time

### Other Settings

To make further settings and adjustments, it is necessary to return to the general synoptic and tap the "PAINEL CTRL" button located in the top right corner.

### Configure Usage

This screen is used to continue the system configuration.

Tap on "CONFIGURE USAGE" (green), and the screen "FILTER USAGE SETTINGS" will appear.

### Filter Usage Settings

The purpose of this setting is to define a periodic maintenance interval for the filter/system.

### Filter Usage Day Count Adjustment for Cleaning

The purpose of this setting is to define a periodic maintenance interval for the filter/system.

Tap the white rectangle for the "filter usage day count adjustment for cleaning" to configure the maintenance interval.

The number of days is adjusted according to the type of installation, location, and the amount of sediment that may accumulate in the filtration system. A recommendation of approximately 90 days is advised. If the system shows no signs of dirt, the maintenance interval may be extended to 120/180 days at most.

Filter maintenance information is visible on the general synoptic panel.

### Cleaning Valve Usage Settings - First Discharge/Overflow

The purpose of this setting is to define the operation of the first discharge and overflow, according to the type of installation.

### First Discharge Valve Opening Time Count

The programming time depends on the installation location, the type of roof, and the roof area.

To configure the valve opening time for the diversion of first rainfall, tap the white rectangle to set the countdown time and programme the first discharge time in minutes.

### Important information for defining countdown times:

According to information from IPMA (Portuguese Institute for Sea and Atmosphere), the classification of precipitation intensity varies between continuous rain and showers.

### Continuous Rain:

- **Light:** for values below 0.5 mm/h
- **Moderate:** for values between 0.5 mm/h and 4 mm/h
- **Heavy:** for values below 2 mm/h

### Showers:

- **Light:** for values below 2 mm/h
- **Moderate:** for values between 2 mm/h and 10 mm/h
- **Heavy:** for values between 10 mm/h and 50 mm/h
- **Violent:** for values above 50 mm/h

Based on this information, moderate and heavy showers occur most frequently, and therefore an average metric of 10 mm/h was used, which corresponds to 10 litres per hour per square metre.

### Example:

Considering that roof washing requires between 1 and 2 mm per m² (1 to 2 litres per m²), for a 1000 m² roof an estimated volume of between 1000 and 2000 litres is needed.

With a roof area of 1000 m² and a rainfall intensity of 10 mm/h, if the required water volume for washing is:
- 2 L/m², approximately 12 minutes will be needed;
- 1 L/m², approximately 6 minutes will be needed.

### Maximum effective dry period - Resets first discharge timer

The purpose of this setting is that, during the first discharge period, the valve remains open to fulfil the programmed time, for example: 30 minutes.

If the rain stops during the first discharge time, the countdown is paused. If the cycle is interrupted, after 30 minutes the countdown restarts.

Example:
- Programmed first discharge time: 6 minutes
- Valve open time without rainfall: 30 minutes
- The rain sensor detects rain and starts the first discharge countdown

Rain stops after 2 minutes, leaving 4 minutes remaining to complete the programmed time.

If no further rainfall occurs within the 30 minutes following the end of rain, to complete the remaining 4 minutes of the first discharge, the valve will remain open and a new cycle will be initiated.

### Dry period countdown with first discharge completed - Start of new cycle

This function defines that, after 96 hours without rain/precipitation, a new first discharge cycle is initiated.

### Example:

If the programmed time is set to 96 hours without rainfall, after this period it is recommended to perform a new roof wash to remove sediment.

Once the programmed 96-hour period is reached, a new first discharge cycle begins.

To configure this, tap the white rectangle and set the countdown time to start the new cycle, in order to programme the dry period following a completed first discharge.

### Valve opening delay in overflow situation

The purpose of this setting is to programme the valve opening time of the first discharge when the overflow level is reached due to the reservoir being full.

### Example:

In the case where a period of 1 minute is programmed, this means that upon reaching the overflow level, the countdown to valve opening begins, and the valve remains open until the water level in the reservoir drops and the overflow condition ceases.

To configure, tap the white rectangle to set the valve opening in an overflow situation and programme the delay time in minutes, noting that the setting must be equal to or greater than one minute.

### Reservoir filling during rainfall period

Esta função serve para habilitar a abertura das eletroválvulas do furo e rede potável em período de chuva, ou seja, caso o nivel de água no reservatório atinga o "nivel de enchimento", as válvulas abrem para efetuar o suprimento de água, visto que o consumo de água é superior ao da chuva.

Caso não pretendam que seja habilitada esta função, mesmo quando forem atingidos os niveis de suprimento da rede potável e furo, as eletroválvulas não atuam, podendo neste caso ser atingido o nivel de falta de água no reservatório se o consumo de água for superior ao que chega de água de chuva.

Numa situação de ausência de chuva ambas as válvulas ficam habilitadas a efetuar o suprimento de água.

### Enable opening of mains/borehole valves during rainfall period

To enable this function, slide the switch to the "ON" position.

To disable this function, slide the switch to the "OFF" position.

Tap the "Home" button located in the top right corner to continue the system parameterisation, returning to the "settings" screen".

### Configure Levels

To continue the configuration, enter "CONFIGURE LEVELS", yellow button.

Tapping it will open a new screen as shown in the following image. This function allows the reservoir levels associated with the device to be defined.

### Important Note:

Before configuring the levels, it is necessary to obtain the actual measurements of the reservoir in order to define the minimum, maximum, and overflow levels. The remaining levels will be adjusted according to the needs of the installation.

### Example:

Considering the image, the reservoir has an overflow level with a defined depth of 2.80 metres. The minimum level is set at 0.50 metres from the bottom.

The **filling level for the mains water** solenoid valve starts at 1.00 metre and ends at 1.50 metres from the bottom of the reservoir **(when enabled in the initial installation programming).**

The maximum filling level of the reservoir is 2.70 metres from the bottom.

### Overflow Level

Tap the white rectangle and enter the measurement of the level between the bottom and the overflow point in metres, confirming with the "enter" key.

### Maximum Level

Tap the white rectangle and enter the measurement of the level between the bottom and the maximum level of the reservoir.

### Filling Level with Borehole Water

Tap the white rectangle and enter the measurement of the level between the bottom and the filling level of the water supplied by the borehole pump.

**Note:** If the **borehole water** supply has not been enabled, the "LEVEL ADJUSTMENT" screen will display the indication "UNAVAILABLE", and the level cannot be configured.

Additionally, the borehole pump icon will not appear in the general synoptic, as shown in the image.

### Filling Level with Mains Water

Tap the white rectangle and enter the measurement of the level between the bottom and the filling level of the water supplied by the mains network.

**Note:** If the mains **water supply** has not been enabled, the "LEVEL ADJUSTMENT" screen will display the indication "UNAVAILABLE", and the level cannot be configured.

Additionally, the filling valve icon for the mains network will not appear in the general synoptic, as shown in the image.

### Minimum Level

Tap the white rectangle and enter the measurement of the level between the bottom and the **minimum level** of the reservoir.

This level also serves to ensure a minimum water level in the reservoir and thereby trigger an alarm indicating that the reservoir is nearly empty.

### All levels are represented in the general synoptic.

A white background appears inside the reservoir showing the current water level in metres, with the percentage displayed above it, as shown in the image. **Example: Level 2.80 m and 100%**

When the overflow level is reached, the general synoptic displays the indication **"overflow" in yellow,** and this alarm is sent by SMS to the designated mobile phones.

When the minimum level is reached, the general synoptic displays the indication **"minimum level"** in red, and this alarm is also sent by SMS to the designated mobile phones.

### Level Probe

The probe must be installed 5 cm above the bottom to transmit the water level information.

If the probe malfunctions or is not properly connected, the message "probe fault/alarm" appears, and it becomes impossible to read the water level inside the reservoir.

If the probe is not functioning, the operation of the device is compromised, and it can only be used in manual mode, without control or level indication.

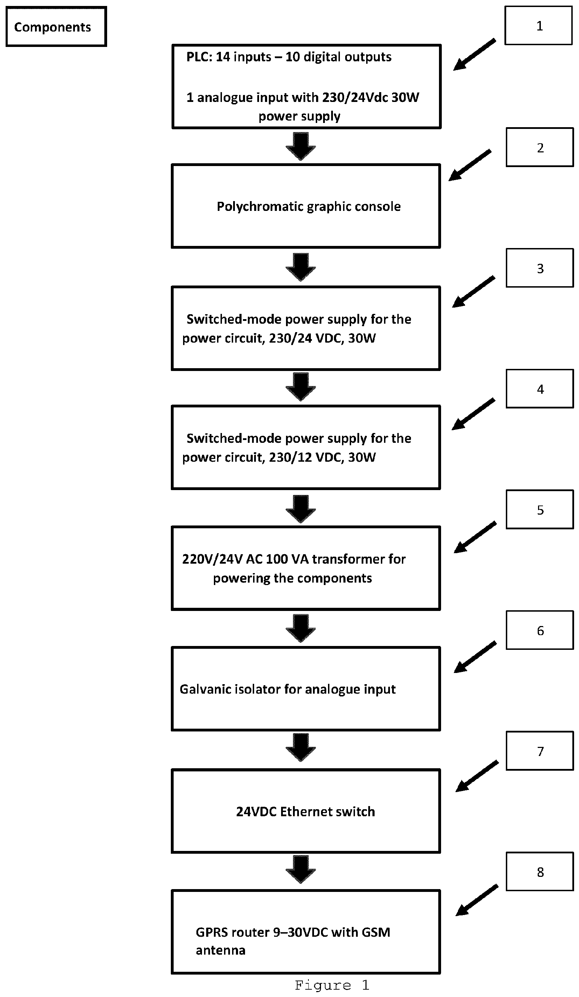

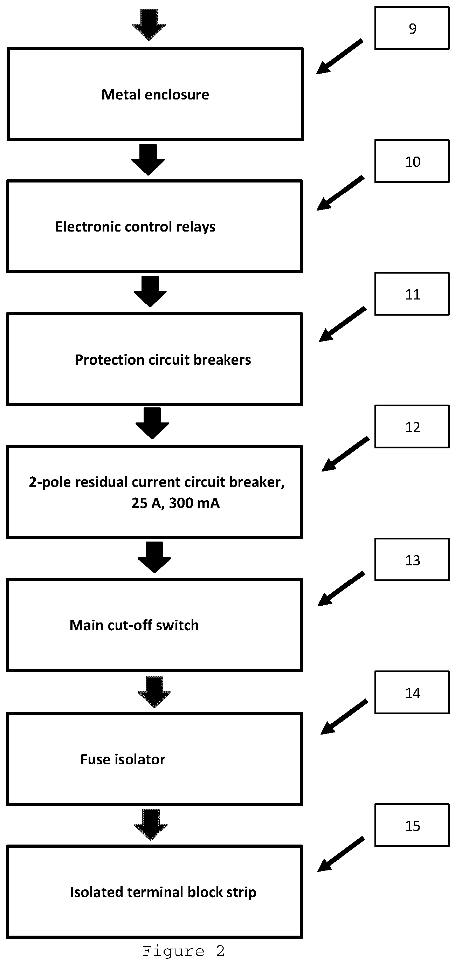

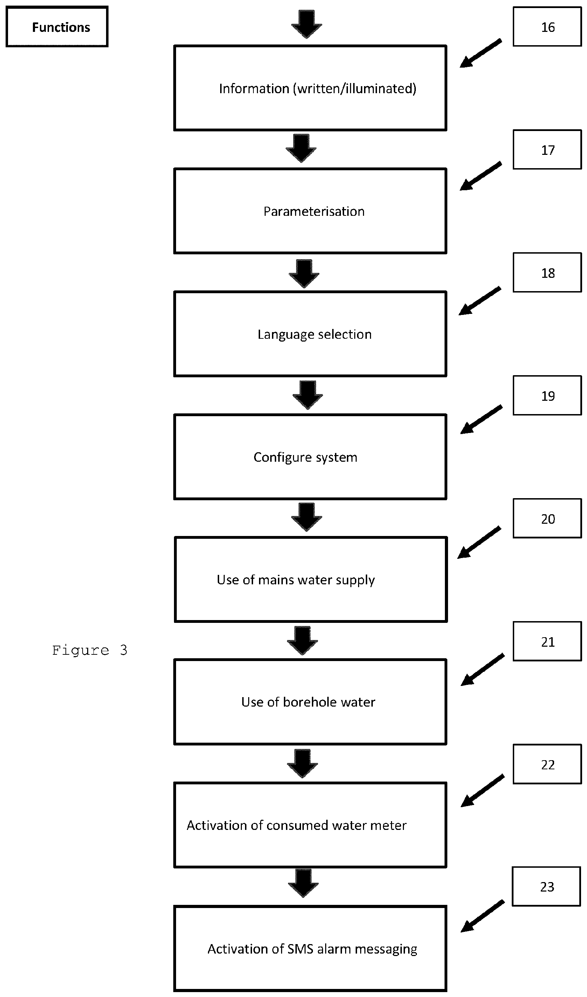

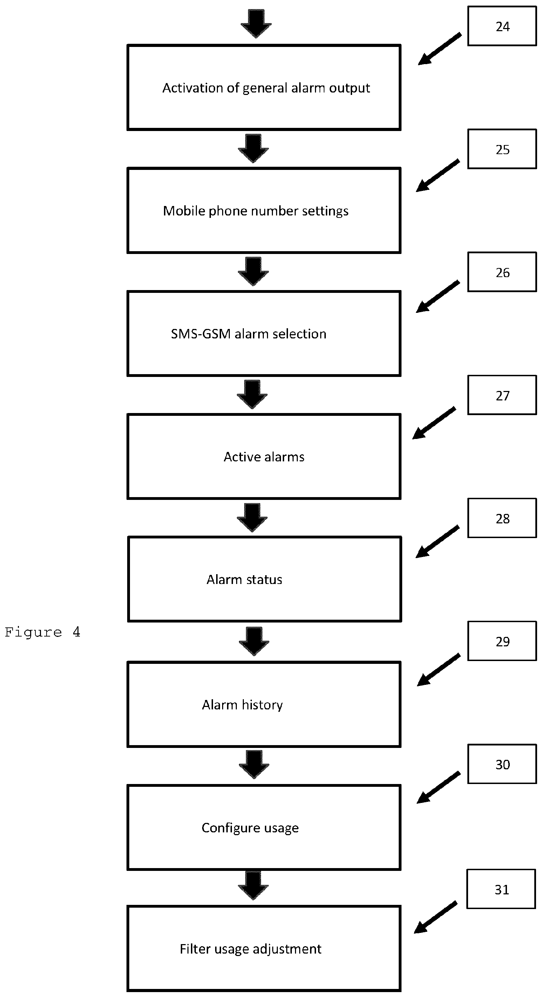

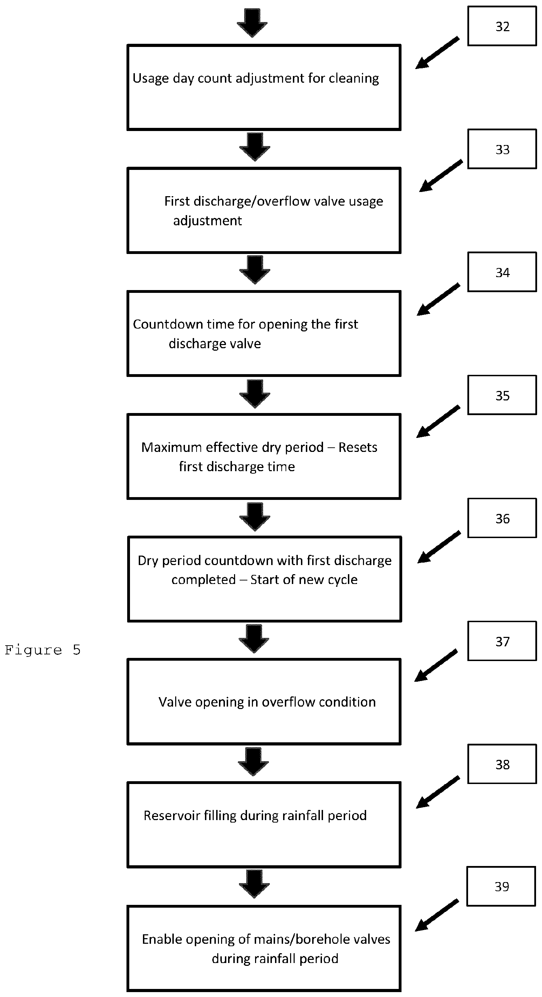

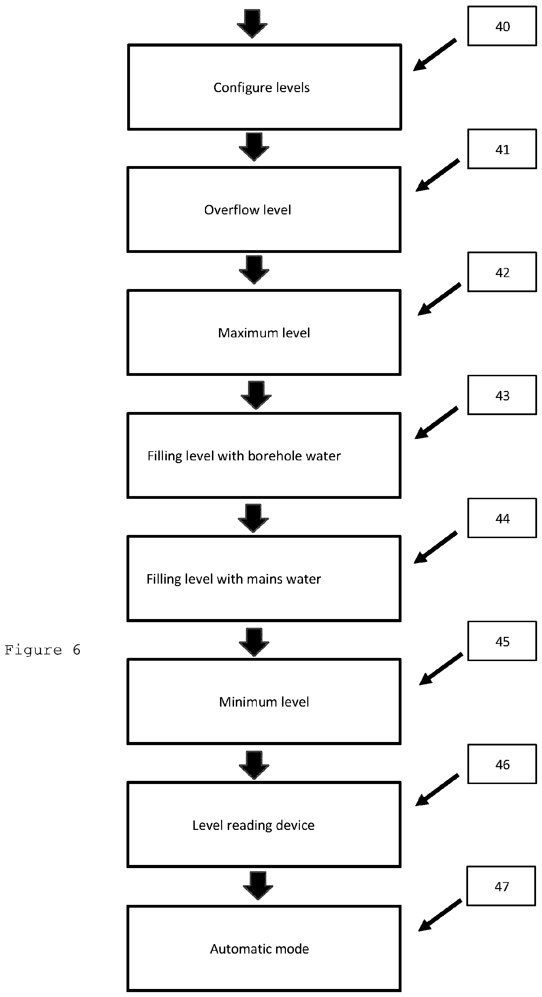

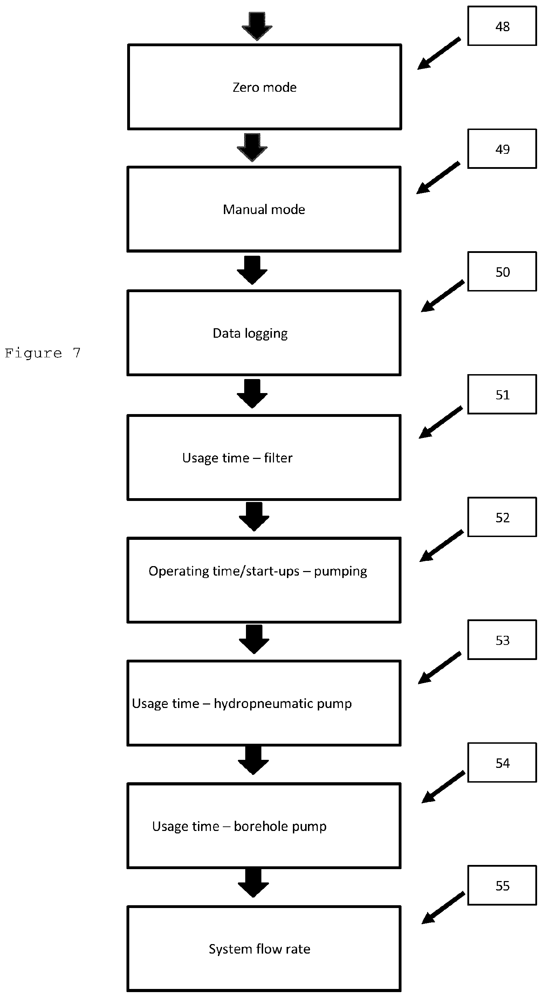

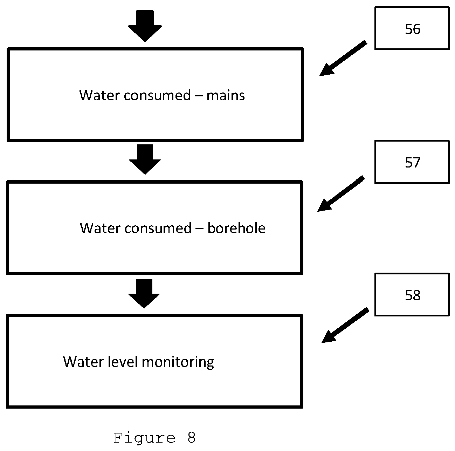

## Claims

1. Computer-implemented method using a format of structured variables and functional blocks, configured for monitoring and managing a rainwater harvesting system, **characterised by** comprising:
- Identification and detection of data indicative of rainfall conditions through at least one reading means, operating purely by electromechanical means based on the programming defined in the programmable logic controller, for the diversion of the first flush;
- definition of the roof washing time and diversion of the first flush based on the ratio between the roof area and the rainfall;
- collection of water in the chamber and subsequent routing to the rainwater drainage networks through monitoring means;
- recording of the rainwater level and readjustment of filling levels from the mains water supply and the borehole depending on the reservoir; and
- parameterisation of the overflow, borehole, and mains water levels, in accordance with the reservoir, based on the ratio between its volume and depth.

2. The method according to claim 1, further comprising the management of the dry period and maximum effective dry period, through pre-programming of the timing for the first rainfall.

3. The method according to claim 1, further comprising the management and monitoring of water overflow by means of at least one reading device coupled to the reservoir and the programming in the programmable logic controller.

4. Method according to claim 1, further comprising the recording of water consumption and the recording of the operating time of the pumping system.

5. Data processing device comprising means for executing the method according to any one of claims 1 to **4.**

6. Device according to claim 5, **characterised by** comprising a synoptic representation of the installation with a colour-coded scheme.

7. Device according to the preceding claims, **characterised by** comprising one or more pages of dynamic settings depending on a selection of more or fewer configuration options of installation elements.

8. Device according to the preceding claims, **characterised by** allowing the retrieval of any information via the GSM network.
